# EUROPÄISCHE PATENTANMELDUNG

(11) **EP 4 509 620 A2**
(43) Veröffentlichungstag der Anmeldung: **19.02.2025**
(21) Anmeldenummer: 24181512.5
(22) Anmeldetag: 11.06.2024
(51) Int. Cl.: C22B 1/00, C22B 3/24, C22B 3/42, C22B 7/00, C22B 26/12

(54) **VERFAHREN ZUR GEWINNUNG VON LITHIUM BEI DER VORBEREITUNG DES RECYCLINGS VON LITHIUM-IONEN-BATTERIEN**

(30) Priorität: 03.08.2023 DE 102023120697
(71) Anmelder: EnBW Energie Baden-Württemberg AG, 76131 Karlsruhe (DE)
(72) Erfinder: Herrmann, Laura, 76227 Karlsruhe (DE); Kölbel, Thomas, 76228 Karlsruhe (DE); Kaymakci, Elif, 76337 Waldbronn (DE); Graczyk-Zajac, Magdalena, 69126 Heidelberg (DE)
(74) Vertreter: DREISS Patentanwälte PartG mbB

(57) **Zusammenfassung**

Die Erfindung betrifft ein Verfahren zur Gewinnung von Lithium bei der Vorbereitung des Recyclings von Lithium-Ionen-Batterien (22), umfassend: Durchführen eines Zerkleinerungsvorgangs, wobei wenigstens eine Lithium-Ionen-Batterie (22) in Anwesenheit eines mit der Lithium-Ionen-Batterie (22) in Kontakt stehenden Schutzfluids (24) in Teilstücke (26) mechanisch zerkleinert wird, im Anschluss an den Zerkleinerungsvorgang, Hindurchleiten des Schutzfluids (24) durch ein Sorbens (20), wobei in dem Schutzfluid (24) enthaltene Lithiumionen durch das Sorbens (20) gebunden werden und ein mit Lithiumionen angereichertes Sorbens (20) erhalten wird, und Hindurchleiten eines Desorptionsfluids (32) durch das mit Lithiumionen angereicherte Sorbens (20), wobei Lithiumionen durch das Desorptionsfluid (32) von dem Sorbens (20) desorbiert werden und ein mit Lithiumionen angereichertes Desorptionsfluid (32) erhalten wird.

## Beschreibung

Die vorliegende Erfindung betrifft ein Verfahren zur Gewinnung von Lithium bei der Vorbereitung des Recyclings von Lithium-Ionen-Batterien.

Aufgrund ihrer Vorzüge wie beispielsweise einer hohen elektrischen Energiedichte, einer hohen elektrischen Arbeitsspannung, einer langen zyklischen Lebensdauer, dem fehlenden Memoryeffekt usw. ist die wiederaufladbare Lithium-Ionen-Batterie bzw. der Lithium-Ionen-Akkumulator in elektrischen Geräten wie Laptops, Mobiltelefonen und Elektroautos inzwischen weit verbreitet. Die Nachfrage nach Lithium steigt unter anderem aufgrund des Ausbaus der Elektromobilität stark an.

In Anbetracht der steigenden Verbreitung von Lithium-Ionen-Batterien steigt auch die Menge an vorhandenen Altbatterien. Um den Bedarf an Lithium nachhaltig zu decken, kommt der Verwertung bzw. dem Recycling von Altbatterien eine große Bedeutung zu. Um Lithium-Ionen-Batterien für das Recycling vorzubereiten, werden die Lithium-Ionen-Batterien typischerweise zunächst in einem Zerkleinerungsvorgang in Teilstücke mechanisch zerkleinert. Sind die Lithium-Ionen-Batterien geladen oder teilweise geladen, so besteht bei der mechanischen Zerkleinerung Brandgefahr. Die Zerkleinerung findet deshalb oftmals in Anwesenheit eines Schutzfluids statt, das eine Brandschutzfunktion erfüllt. Durch die mechanische Zerkleinerung in die Teilstücke wird das Lithiumhaltige Innere der Lithium-Ionen-Batterien freigelegt. Das in den Teilstücken enthaltene Lithium kann dann im Rahmen des eigentlichen Recyclings durch eine pyrometallurgische Behandlung und/oder durch eine hydrometallurgische Behandlung der Teilstücke gewonnen werden.

Die Erfindung beschäftigt sich mit der Aufgabe, die Effizienz im Hinblick auf die Rückgewinnung von Lithium aus Lithium-Ionen-Batterien zu steigern.

Die vorstehende Aufgabe wird erfindungsgemäß durch ein Verfahren mit den Merkmalen des Anspruchs 1 gelöst. Die Unteransprüche und die Beschreibung geben vorteilhafte Varianten und Ausführungsformen an.

Erfindungsgemäß ist also ein Verfahren zur Gewinnung von Lithium bei der Vorbereitung des Recyclings von Lithium-Ionen-Batterien vorgesehen.

Das erfindungsgemäße Verfahren umfasst: Durchführen eines Zerkleinerungsvorgangs, wobei wenigstens eine Lithium-Ionen-Batterie in Anwesenheit eines mit der Lithium-Ionen Batterie in Kontakt stehenden Schutzfluids in Teilstücke mechanisch zerkleinert wird.

Es wird also wenigstens eine Lithium-Ionen-Batterie mit einem Schutzfluid in Kontakt gebracht und dann mechanisch zerkleinert. Der Zerkleinerungsvorgang kann in verschiedenen Varianten ausgestaltet sein. Beispielsweise findet im Rahmen des Zerkleinerungsvorgangs eine Schneidzerkleinerung und/oder eine Schlagzerkleinerung der wenigstens einen Lithium-Ionen-Batterie statt. Bevorzugt wird die wenigstens eine Lithium-Ionen-Batterie durch einen Schredder bzw. Häcksler in die Teilstücke mechanisch zerkleinert. Der Zerkleinerungsvorgang findet in Anwesenheit des Schutzfluids statt, das mit der wenigstens einen Lithium-Ionen-Batterie in Kontakt steht. Vorzugsweise wird als Schutzfluid Wasser oder eine wässrige Lösung verwendet. Wasser bzw. wässrige Lösungen sind als Schutzfluid besonders geeignet, weil sie Temperaturspitzen sicher vermeiden und bei Kontakt mit elektrisch geladenen Lithium-Ionen-Batterien bzw. elektrisch geladenen Teilstücken von Lithium-Ionen-Batterien die elektrische Ladung abbauen. Die Anwesenheit des Schutzfluids führt jedoch auch dazu, dass ein Teil der Stoffe der wenigstens einen Lithium-Ionen-Batterie in das Schutzfluid abgegeben wird. Zu den abgegebenen Stoffen gehören Lithiumionen und sonstige Stoffe wie beispielsweise Phosphor, Nickel, Kobalt, Mangan, Alkohole (Methanol, Ethanol), Fluorid, Sulfat organische Carbonate oder anorganische Carbonate. Das Schutzfluid wird also mit Lithiumionen angereichert. Die sonstigen Stoffe werden im Folgenden unter dem Begriff "Fremdstoffe" zusammengefasst.

Das erfindungsgemäße Verfahren umfasst außerdem: Im Anschluss an den Zerkleinerungsvorgang, Hindurchleiten des Schutzfluids durch ein Sorbens, wobei in dem Schutzfluid enthaltene Lithiumionen durch das Sorbens gebunden werden und ein mit Lithiumionen angereichertes Sorbens erhalten wird, und Hindurchleiten eines Desorptionsfluids durch das mit Lithiumionen angereicherte Sorbens, wobei Lithiumionen durch das Desorptionsfluid von dem Sorbens desorbiert werden und ein mit Lithiumionen angereichertes Desorptionsfluid erhalten wird.

In bekannten Verfahren wurden das Schutzfluid und damit die in dem Schutzfluid enthaltenen Lithiumionen nach dem Zerkleinerungsvorgang verworfen. Durch die erfindungsgemäße Vorgehensweise, also das Hindurchleiten des Schutzfluids durch das Sorbens und die damit verbundene Extraktion von Lithiumionen aus dem Schutzfluid, kann demgegenüber die Effizienz im Hinblick auf die Rückgewinnung von Lithium aus Lithium-Ionen-Batterien insgesamt gesteigert werden. Überraschenderweise hat sich gezeigt, dass die in dem Schutzfluid enthaltenen Fremdstoffe die Rückgewinnung von Lithium durch das Sorbens höchstens geringfügig beeinträchtigen. Insbesondere ist die zu erwartende Beschädigung des chemisch und mechanisch instabilen Sorbens durch die Fremdstoffe überraschend gering ausgefallen.

Vorzugsweise wird die wenigstens eine Lithium-Ionen-Batterie im Rahmen des Zerkleinerungsvorgangs in einem Bad aus Schutzfluid mechanisch zerkleinert. Hierdurch wird die Brandgefahr durch das Schutzfluid besonders wirksam verringert. Weil die in das Schutzfluid abgegebenen Lithiumionen durch das Sorbens zurückgewonnen werden, kann ein großes Volumen an Schutzfluid verwendet werden, ohne dass dadurch die Effizienz der Rückgewinnung von Lithium aus der wenigstens einen Lithium-Ionen-Batterie nachteilig beeinträchtigt wird. Alternativ kann die wenigstens eine Lithium-Ionen-Batterie auch lediglich mit dem Schutzfluid benetzt und dann mechanisch zerkleinert werden.

Das schließlich erhaltene, mit Lithiumionen angereicherte Desorptionsfluid kann in weiteren Schritten aufgearbeitet werden, um schließlich eine Lithiumverbindung in Batteriequalität zu erhalten.

Das Verfahren kann für verschiedene Arten von Lithium-Ionen-Batterien eingesetzt werden, also für verschiedene Zellchemie-Typen. Beispielsweise ist die wenigstens eine Lithium-Ionen-Batterie ein Nickel-Mangan-Kobalt-Akkumulator oder ein Lithium-Eisenphosphat-Akkumulator.

In einigen bevorzugten Ausführungsformen ist vorgesehen, dass das Sorbens ein Aluminiumoxid-basiertes Sorbens ist. Aluminiumoxid-basierte Sorbenzien sind chemisch und mechanisch besonders stabil, sodass eine Beschädigung durch die Fremdstoffe allenfalls in äußerst geringem Ausmaß stattfindet. Aluminiumoxid-basierte Sorbenzien binden Lithiumionen durch Adsorption. Bei einem Adsorptionsvorgang reichert sich das adsorbierte Material an einer Grenzfläche des Sorbens an und/oder wird in eine Schichtstruktur des Sorbens eingelagert. Besonders bevorzugt ist das Aluminiumoxid-basierte Sorbens ein Aluminium layered double hydroxide (LDH) mit der chemischen Summenformel LiₓAl₂(OH)₆Clₓ·n H₂O, bspw. LiCl·Al₂(OH)₆·n H₂O. Ist das Sorbens ein Aluminiumoxid-basiertes Sorbens, so wird als Desorptionsfluid vorzugsweise salzarmes Wasser verwendet.

In einigen bevorzugten Ausführungsformen ist vorgesehen, dass das Sorbens ein Manganoxid-basiertes Sorbens ist. Manganoxid-basierte Sorbenzien zeichnen sich durch ihre hohe Selektivität im Hinblick auf die Bindung von Lithiumionen aus, sodass durch Manganoxid-basierte Sorbenzien eine Feinreinigung realisiert werden kann. Manganoxid-basierte Sorbenzien binden Lithiumionen durch Austausch von gebundenen Wasserstoffionen gegen Lithiumionen. Manganoxid-basierte Sorbenzien wirken bei der Bindung von Lithiumionen also als Kationenaustauscher. Besonders bevorzugt ist das Manganoxid-basierte Sorbens ein Sorbens mit der chemischen Summenformel HₓMn_{y}O_{z}, bspw. H_{1.6}Mn_{1.6}O₄. Ist das Sorbens ein Manganoxid-basiertes Sorbens, so wird als Desorptionsfluid vorzugsweise ein säurehaltiges Desorptionsfluid verwendet. Besonders bevorzugt weist das säurehaltige Desorptionsfluid Salzsäure, Schwefelsäure und/oder Essigsäure auf.

In einigen bevorzugten Ausführungsformen ist vorgesehen, dass das Sorbens ein Titanoxid-basiertes Sorbens ist. Auch Titanoxid-basierte Sorbenzien zeichnen sich durch ihre hohe Selektivität im Hinblick auf die Bindung von Lithiumionen aus. Dabei binden auch Titanoxid-basierte Sorbenzien Lithiumionen durch Austausch von gebundenen Wasserstoffionen gegen Lithiumionen. Besonders bevorzugt ist das Titanoxid-basierte Sorbens ein Sorbens mit der chemischen Summenformel HₓTi_{y}O_{z}, bspw. H₂TiO₃. Vorzugsweise wird auch bei Verwendung eines Titanoxid-basierten Sorbens ein säurehaltiges Desorptionsfluid verwendet. Besonders bevorzugt weist das säurehaltige Desorptionsfluid Salzsäure, Schwefelsäure und/oder Essigsäure auf.

Es kann auch ein Gemisch der vorstehend erwähnten Sorbenzien als Sorbens verwendet werden, bspw. ein Gemisch aus einem Titanoxid-basierten Sorbens und einem Manganoxid-basierten Sorbens.

In einigen bevorzugten Ausführungsformen ist vorgesehen, dass die Teilstücke der wenigstens einen Lithium-Ionen-Batterie und das Schutzfluid vor dem Hindurchleiten des Schutzfluids durch das Sorbens voneinander getrennt werden. Hierdurch wird vermieden, dass das Sorbens mit den Teilstücken der wenigstens einen Lithium-Ionen-Batterie in Kontakt gelangt. Besonders bevorzugt werden die Teilstücke und das Schutzfluid durch Filtrieren voneinander getrennt. Die Teilstücke und das Schutzfluid können jedoch auch bspw. durch Dekantieren voneinander getrennt werden.

In einigen bevorzugten Ausführungsformen ist vorgesehen, dass das Schutzfluid ohne chemische Vorbehandlung im Anschluss an den Zerkleinerungsvorgang durch das Sorbens hindurchgeleitet wird. Zwischen dem Abschluss des Zerkleinerungsvorgangs und dem anschließenden Einleiten des Schutzfluids in das Sorbens findet also keine chemische Vorbehandlung des Schutzfluids statt. Mit einer chemischen Vorbehandlung ist die Beeinflussung einer Eigenschaft des Schutzfluids durch Zugabe einer oder mehrerer Chemikalien gemeint. Beispiele für eine solche chemische Vorbehandlung sind die Präzipitation eines Bestandteils des Schutzfluids durch Zugabe eines geeigneten Präzipitatbildners oder die Veränderung des pH-Wertes des Schutzfluids durch Zugabe einer Säure oder einer Base. Durch den Verzicht auf eine chemische Vorbehandlung kann eine besonders zeiteffiziente Durchführung des Verfahrens realisiert werden.

In einigen bevorzugten Ausführungsformen ist vorgesehen, dass eine Temperatur des Schutzfluids beim Einleiten des Schutzfluids in das Sorbens eine Schwellentemperatur von 40 °C überschreitet. Es hat sich gezeigt, dass bei einer solchen Temperatur des Schutzfluids Lithiumionen besonders effektiv durch das Sorbens gebunden werden. Vorzugsweise überschreitet die Temperatur des Schutzfluids beim Einleiten des Schutzfluids in das Sorbens eine Schwellentemperatur von 50 °C, vorzugsweise eine Schwellentemperatur von 70 °C, besonders bevorzugt eine Schwellentemperatur von 80 °C.

In einigen bevorzugten Ausführungsformen ist vorgesehen, dass der Zerkleinerungsvorgang derart durchgeführt wird, dass das Schutzfluid durch den Zerkleinerungsvorgang auf eine die Schwellentemperatur überschreitende Temperatur erwärmt wird. Die Erwärmung des Schutzfluids im Rahmen des Zerkleinerungsvorgangs kommt im Wesentlichen durch die Entladung von geladenen oder teilweise geladenen Lithium-Ionen-Batterien bzw. Teilstücken von Lithium-Ionen-Batterien zustande. Eine gewünschte Temperatur des Schutzfluids kann dabei bspw. durch die Veränderung des Verhältnisses von Schutzfluid zu Lithium-Ionen-Batterien oder durch die Veränderung des durchschnittlichen Ladungszustands der zu zerkleinernden Lithium-Ionen-Batterien angepasst werden. Die Erwärmung des Schutzfluids durch den Zerkleinerungsvorgang hat den Vorteil, dass auf eine energieintensive, gesonderte Erwärmung des Schutzfluids verzichtet werden kann. Stattdessen wird die ohnehin freiwerdende Wärmeenergie zur Erwärmung des Schutzfluids genutzt.

In einigen bevorzugten Ausführungsformen ist vorgesehen, dass in den Teilstücken enthaltenes Lithium durch eine pyrometallurgische Behandlung und/oder durch eine hydrometallurgische Behandlung der Teilstücke gewonnen wird. Die in dem Zerkleinerungsvorgang erzeugten Teilstücke der wenigstens einen Lithium-Ionen-Batterie werden also im Rahmen einer pyrometallurgischen Behandlung und/oder einer hydrometallurgischen Behandlung weiterverarbeitet. Diese Verarbeitung der Teilstücke bildet das eigentliche Recycling der wenigstens einen Lithium-Ionen-Batterie.

Die Erfindung wird im Folgenden anhand der Figuren näher beschrieben, wobei gleiche oder funktional gleiche Elemente gegebenenfalls lediglich einmal mit Bezugszeichen versehen sind. Die Beschreibung dient als Beispiel und ist nicht einschränkend zu verstehen. Es zeigen
- Figur 1: eine schematische Darstellung einer Anlage zur Vorbereitung des Recyclings von Lithium-Ionen-Batterien; und
- Figur 2: ein Verfahren zur Gewinnung von Lithium bei der Vorbereitung des Recyclings von Lithium-Ionen-Batterien.

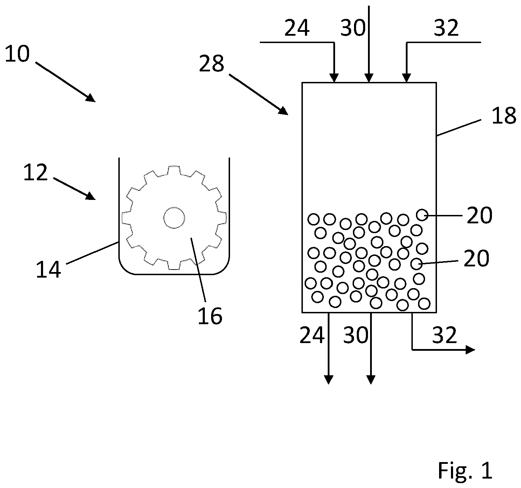

Figur 1 zeigt eine Anlage 10 zur Vorbereitung des Recyclings von Lithium-Ionen-Batterien 22 in einer schematischen Darstellung.

Die Anlage 10 umfasst eine Zerkleinerungseinrichtung 12, die dazu ausgebildet ist, Gegenstände wie bspw. Lithium-Ionen-Batterien 22 in Teilstücke 26 mechanisch zu zerkleinern. Die Zerkleinerungseinrichtung 12 umfasst hierzu in der vorliegenden schematischen Darstellung ein Behältnis 14 und eine in dem Behältnis 14 angeordnete Zerkleinerungseinheit 16.

Die Anlage 10 umfasst außerdem eine Lithium-Sorptionseinrichtung 28. Die Lithium-Sorptionseinrichtung 28 umfasst einen Behälter 18, der ein Sorbens 20 enthält. Das Sorbens 20 ist dazu ausgebildet, Lithiumionen zu binden. Vorzugsweise ist das Sorbens 20 ein Aluminiumoxid-basiertes Sorbens, ein Manganoxid-basiertes Sorbens oder ein Titanoxid-basiertes Sorbens. Das Sorbens 20 liegt als Feststoff vor. Der Behälter 18 ist bei dem in Figur 1 dargestellten Ausführungsbeispiel als Kolonne ausgebildet.

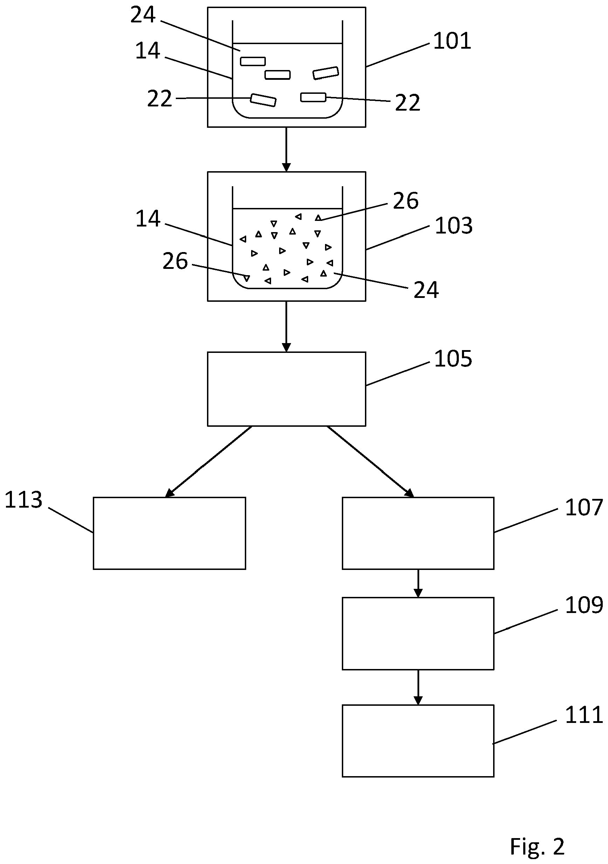

Im Folgenden wird mit zusätzlichem Bezug auf Figur 2 ein vorteilhaftes Verfahren zur Gewinnung von Lithium bei der Vorbereitung des Recyclings von Lithium-Ionen-Batterien 22 näher erläutert. Figur 2 zeigt das Verfahren anhand eines Flussdiagramms. Das Verfahren wird mittels der in Figur 1 gezeigten Anlage 10 durchgeführt.

In einem ersten Schritt 101 werden mehrere Lithium-Ionen-Batterien 22 und ein Schutzfluid 24 bereitgestellt und in das Behältnis 14 der Zerkleinerungseinrichtung 12 gegeben. Die Lithium-Ionen-Batterien 22 stehen dann in Kontakt mit dem Schutzfluid 24. Das Verhältnis von Lithium-Ionen-Batterien 22 zu Schutzfluid 24 ist in Figur 2 rein schematisch angedeutet. Vorliegend wird als Schutzfluid 24 Wasser verwendet.

In einem zweiten Schritt 103 wird ein Zerkleinerungsvorgang durchgeführt, wobei die Lithium-Ionen-Batterien 22 in Anwesenheit des Schutzfluids 24 in Teilstücke 26 mechanisch zerkleinert werden. Der Zerkleinerungsvorgang wird durch die in Figur 2 nicht dargestellte Zerkleinerungseinheit 16 durchgeführt. Durch die mechanische Zerkleinerung werden die Lithium-Ionen-Batterien 22 für das Recycling vorbereitet. Die Darstellung der Teilstücke 26 ist im Hinblick auf deren Form und Größe in Figur 2 rein schematisch. Sind die Lithium-Ionen-Batterien 22 geladen oder teilweise geladen, so besteht bei der mechanischen Zerkleinerung Brandgefahr. Die Zerkleinerung wird deshalb in Anwesenheit des Schutzfluids 24 durchgeführt, das eine Brandschutzfunktion erfüllt.

Weil das Schutzfluid 24 bei der mechanischen Zerkleinerung in Kontakt mit den Lithium-Ionen-Batterien 22 steht, wird ein Teil der in den Lithium-Ionen-Batterien 22 enthaltenen Stoffe durch das Schutzfluid 24 aufgenommen. Insbesondere werden in den Lithium-Ionen-Batterien 22 bzw. den Teilstücken 26 enthaltene Lithiumionen teilweise durch das Schutzfluid 24 ausgewaschen.

Sind die Lithium-Ionen-Batterien 22 nicht vollständig entladen, sondern teilweise oder vollständig geladen, so wird durch das Schutzfluid 24 während des Zerkleinerungsvorgangs eine Entladung der Lithium-Ionen-Batterien 22 bzw. der Teilstücke 26 erreicht. Durch die Entladung entsteht Wärmeenergie, die durch das Schutzfluid 24 aufgenommen wird.

Vorzugsweise wird der Zerkleinerungsvorgang derart durchgeführt, dass sich das Schutzfluid 24 auf eine Temperatur von mehr als 80 °C erwärmt. Eine gewünschte Temperatur des Schutzfluids 24 kann bspw. dadurch erreicht werden, dass ein geeignetes Verhältnis der Anzahl an Lithium-Ionen-Batterien 22 zu dem Volumen des Schutzfluids 24 gewählt wird, oder dadurch, dass Lithium-Ionen-Batterien 22 mit einer geeigneten durchschnittlichen Restladung verwendet werden.

In einem dritten Schritt 105 werden die Teilstücke 26 und das Schutzfluid 24 voneinander getrennt. Vorzugsweise werden die Teilstücke 26 und das Schutzfluid 24 durch Filtrieren voneinander getrennt. Eine Trennung kann beispielsweise durch eine separate Filtrationseinheit oder durch einen Filter erreicht werden, der in einen Fluidauslass des Behältnisses 14 integriert ist. Alternativ können die Teilstücke 26 und das Schutzfluid 24 auch durch Dekantieren voneinander getrennt werden.

In einem vierten Schritt 107 wird das Schutzfluid 24 durch das Sorbens 20 hindurchgeleitet. Das Hindurchleiten eines Fluids durch ein Sorbens beinhaltet das Einleiten des Fluids in das Sorbens und das anschließende Ablassen des Fluids aus dem Sorbens. Beim Hindurchleiten des Schutzfluids 24 durch das Sorbens 20 werden in dem Schutzfluid 24 enthaltene Lithiumionen durch das Sorbens 20 gebunden. Es wird also ein mit Lithiumionen angereichertes Sorbens 20 erhalten. Je nach Sorbens liegt der Bindung der Lithiumionen ein Adsorptionsvorgang oder ein Ionenaustausch zugrunde. Vorzugsweise weist das Schutzfluid 24 beim Einleiten in das Sorbens 20 eine Temperatur von mehr als 80 °C auf. Eine derart hohe Temperatur führt zu einer effektiven Bindung der Lithiumionen durch das Sorbens 20.

In einem optionalen fünften Schritt 109 wird das Sorbens 20 gespült. Hierzu wird ein Spülfluid 30 durch das mit Lithiumionen angereicherte Sorbens 20 hindurchgeleitet. Durch das Hindurchleiten des Spülfluids 30 durch das Sorbens 20 werden Reste des Schutzfluids 24 mitsamt den nicht gebundenen Fremdstoffen aus dem Sorbens 20 verdrängt. Vorzugsweise wird als Spülfluid 30 Inertgas, insbesondere Stickstoff, oder Wasser verwendet.

In einem sechsten Schritt 111 wird ein Desorptionsfluid 32 durch das mit Lithiumionen angereicherte Sorbens 20 hindurchgeleitet. Die gebundenen Lithiumionen werden durch das Desorptionsfluid 32 desorbiert, sodass ein regeneriertes Sorbens 20 und ein mit Lithiumionen angereichertes Desorptionsfluid 32 erhalten werden. Je nach Sorbens 20 wird ein jeweils anderes Desorptionsfluid 32 verwendet. Ist das Sorbens 20 ein Aluminiumoxid-basiertes Sorbens, so wird als Desorptionsfluid 32 vorzugsweise salzarmes Wasser verwendet. Ist das Sorbens 20 jedoch ein Manganoxid-basiertes Sorbens oder ein Titanoxid-basiertes Sorbens, so wird als Desorptionsfluid 32 vorzugsweise ein säurehaltiges Desorptionsfluid 32 verwendet.

In nicht dargestellten anschließenden Schritten wird das mit Lithiumionen angereicherte Desorptionsfluid 32 weiter aufgereinigt, sodass schließlich eine Lithiumverbindung in Batteriequalität erhalten wird.

In einem siebten Schritt 113 wird in den Teilstücken 26 enthaltenes Lithium durch eine pyrometallurgische Behandlung und/oder durch eine hydrometallurgische Behandlung der Teilstücke 26 gewonnen. Dieser Vorgang bildet das eigentliche Recycling der Lithium-Ionen-Batterien 22.

## Patentansprüche

1. Verfahren zur Gewinnung von Lithium bei der Vorbereitung des Recyclings von Lithium-Ionen-Batterien (22), umfassend:
a. Durchführen eines Zerkleinerungsvorgangs, wobei wenigstens eine Lithium-Ionen-Batterie (22) in Anwesenheit eines mit der Lithium-Ionen-Batterie (22) in Kontakt stehenden Schutzfluids (24), insbesondere Wasser oder eine wässrige Lösung, in Teilstücke (26) mechanisch zerkleinert wird,
b. im Anschluss an den Zerkleinerungsvorgang, Hindurchleiten des Schutzfluids (24) durch ein Sorbens (20), wobei in dem Schutzfluid (24) enthaltene Lithiumionen durch das Sorbens (20) gebunden werden und ein mit Lithiumionen angereichertes Sorbens (20) erhalten wird, und
c. Hindurchleiten eines Desorptionsfluids (32) durch das mit Lithiumionen angereicherte Sorbens (20), wobei Lithiumionen durch das Desorptionsfluid (32) von dem Sorbens (20) desorbiert werden und ein mit Lithiumionen angereichertes Desorptionsfluid (32) erhalten wird.

2. Verfahren nach Anspruch 1, **dadurch gekennzeichnet, dass** das Sorbens (20) ein Aluminiumoxid-basiertes Sorbens ist.

3. Verfahren nach Anspruch 1, **dadurch gekennzeichnet, dass** das Sorbens (20) ein Manganoxid-basiertes Sorbens ist.

4. Verfahren nach Anspruch 1, **dadurch gekennzeichnet, dass** das Sorbens (20) ein Titanoxid-basiertes Sorbens ist.

5. Verfahren nach einem der vorstehenden Ansprüche, **dadurch gekennzeichnet, dass** die Teilstücke (26) und das Schutzfluid (24) vor dem Hindurchleiten des Schutzfluids (24) durch das Sorbens (20) voneinander getrennt werden, insbesondere durch Filtrieren.

6. Verfahren nach einem der vorstehenden Ansprüche, **dadurch gekennzeichnet, dass** das Schutzfluid (24) ohne chemische Vorbehandlung im Anschluss an den Zerkleinerungsvorgang durch das Sorbens (20) hindurchgeleitet wird.

7. Verfahren nach einem der vorstehenden Ansprüche, **dadurch gekennzeichnet, dass** eine Temperatur des Schutzfluids (24) beim Einleiten des Schutzfluids (24) in das Sorbens (20) eine Schwellentemperatur von 40 °C überschreitet, vorzugsweise eine Schwellentemperatur von 50 °C, vorzugsweise eine Schwellentemperatur von 70 °C, besonders bevorzugt eine Schwellentemperatur von 80 °C.

8. Verfahren nach Anspruch 7, **dadurch gekennzeichnet, dass** der Zerkleinerungsvorgang derart durchgeführt wird, dass das Schutzfluid (24) durch den Zerkleinerungsvorgang auf eine die Schwellentemperatur überschreitende Temperatur erwärmt wird.

9. Verfahren nach einem der vorstehenden Ansprüche, **dadurch gekennzeichnet, dass** vor dem Hindurchleiten des Desorptionsfluids (32) ein Spülfluid (30), insbesondere Inertgas oder Wasser, durch das mit Lithiumionen angereicherte Sorbens (20) hindurchgeleitet wird.

10. Verfahren nach einem der vorstehenden Ansprüche, **dadurch gekennzeichnet, dass** in den Teilstücken (26) enthaltenes Lithium durch eine pyrometallurgische Behandlung und/oder durch eine hydrometallurgische Behandlung der Teilstücke (26) gewonnen wird.
